(19) Europäisches Patentamt
European Patent Office
Office européen des brevets

(11) Numéro de publication: 0 252 061 A1

(12) # DEMANDE DE BREVET EUROPEEN

(21) Numéro de dépôt: 87870093.9

(22) Date de dépôt: 03.07.87

(51) Int. Cl.[4]: C 08 F 255/00
C 08 K 5/54
//(C08F255/00,230:08)

(30) Priorité: 04.07.86 BE 216874

(43) Date de publication de la demande: 07.01.88 Bulletin 88/01

(84) Etats contractants désignés: AT BE CH DE ES FR GB GR IT LI LU NL SE

(71) Demandeur: CABLERIES ET CORDRIES DU HAINAUT S.A. en abrégé CABLERIES DE DOUR
Rue du Roi Albert, 57
B-7270 Dour (BE)

S.A. FABRICABLE KABELFABRIEK VAN HUIZINGEN N.V. en abrégé FABRICABLE
Rue du Marché 79
B-1000 Bruxellles (BE)

(72) Inventeur: Bastin, Pierre
Avenue Montalembert, 12
B-1330 Rixensart (BE)

Polart Jules
Chaussée Brunehault, 380
B-6510 Morlanwelz (BE)

Versluijs Jean-Jacques
Caudronstraat, 5
B-9300 Aalst (BE)

Delaunois Guy
Voie du Prêtre, 20
B-7270 Dour (BE)

(74) Mandataire: Kuborn, Jacques et al
Office Hanssens S.P.R.L. Square Marie-Louise, 40 (bte 19)
B-1040 Bruxelles (BE)

(54) **Procédé de production de polymères et copolymères vinyliques réticulables par greffage d'un composé hydrolysable du silane.**

(57) Procédé dans lequel on soumet à traitement mécanique, en présence d'un composé du silane, un polymère ou copolymère susceptible de donner des radicaux par traitement mécanique. Il se caractérisé en ce qu'il consiste à ajouter à ce premier polymère un second polymère ou copolymère, non susceptible de donner des radicaux par traitement mécanique, à effectuer le traitement mécanique de la composition polymérique ainsi obtenue, et à favoriser une réaction de propagation des radicaux du premier au second polymère ou copolymère.

EP 0 252 061 A1

**Description**

Procédé de production de polymères et copolymères vinyliques réticulables par greffage d'un composé hydrolysable du silane.

La présente invention concerne un nouveau procédé de production de polymères et copolymères vinyliques réticulables par greffage d'un composé hydrolysable du silane.

On connaît dans la technique différentes méthodes pour produire des polymères ou copolymères réticulables par greffage d'un silane, notamment à l'aide de peroxydes organiques, d'une irradiation ou d'un traitement mécanique.

C'est à ce dernier type de méthodes - par traitement mécanique -qu'appartient l'invention.

Dans ce domaine, la publication DE-A-2 646 080 divulgue un traitement mécanique et/ou thermomécanique pour la production de mélanges réticulables en présence d'humidité, qui s'applique à des polymères possédant des liaisons doubles dans la chaîne latérale. Cette divulgation enseigne qu'il est possible de produire des radicaux libres, dans ces polymères de structure particulière, par simple traitement mécanique et/ou thermomécanique.

La publication DE-C-1 794 028 enseigne d'autre part de mélanger avec traitement mécanique du polyéthylène, des polymères acryliques, du chlorure de polyvinyle ou des polymères mixtes d'acrylonitrile, de butadiène et de styrène, pour produire des radicaux libres susceptibles de greffage par un silane.

Jusqu'à présent, le procédé mécanique ne permet de produire des radicaux libres ou centres actifs, avec un rendement suffisant, que dans des polymères ayant une viscosité tellement importante (pour que le cisaillement, résultant d'un malaxage ou autre traitement mécanique, brise des liaisons et crée des radicaux dans la masse polymérique), que le produit obtenu présente des propriétés (dureté et propriétés rhéologiques) le rendant pratiquement inutilisable dans l'industrie.

D'autre part, les polymères susceptibles d'application industrielle présentent une viscosité qui ne permet pas d'obtenir un degré de réticulation suffisant par ce procédé.

Enfin, une tentative d'augmenter la température de malaxage -qui conduirait à priori à une amélioration du rendement du greffage -nécessiterait de prendre des mesures pour éviter une dégradation par oxydation du polymère, soit:
- en augmentant la quantité de silane (le silane et l'oxygène étant en compétition pour réagir avec les sites actifs), aboutissant à un taux de réticulation trop important,
- en travaillant à l'abri de l'oxygène, ce qui oblige à recourir à des techniques peu intéressantes pour l'industrie.

De façon surprenante, on a découvert selon l'invention que l'on pouvait obtenir un produit présentant à la fois un degré suffisant de réticulation et des propriétés (entre autres dureté et propriétés rhéologiques) le rendant apte à un usage dans l'industrie, en malaxant un mélange d'un premier polymère de viscosité importante, ou susceptible de donner des radicaux par traitement mécanique, et d'un second polymère moins visqueux, ou non susceptible de donner des radicaux par traitement mécanique; on travaille de façon avantageuse à une température interne de la matrice polymérique supérieure à la température de dégradation du premier polymère, de viscosité importante, favorisant ainsi la formation de mécanoradicaux dans le premier polymère, sans produire de dégradation de ses propriétés mécaniques, du fait d'une propagation des radicaux du premier au second polymère, et donc d'une moindre possibilité d'oxydation du premier polymère.

La viscosité du polymère sera donnée ci-après, soit par l'indice de fluidité (MFI) selon la norme ASTM-D-1238, soit par la viscosité Mooney selon la norme ASTM-D-3346.

Selon l'invention, on se propose de fournir un procédé permettant le greffage de silane sur des polymères ou copolymères
- sans liaison double, ni dans la chaîne principale ni dans la chaîne latérale
- ne présentant pas une viscosité suffisante pour donner normalement des radicaux par traitement mécanique.

Un but de l'invention est donc de fournir un procédé de production de polymères et copolymères vinyliques réticulables par greffage d'un composé hydrolysable du silane, dans lequel on soumet à traitement mécanique, en présence d'un composé du silane, un polymère ou copolymère susceptible de donner des radicaux par traitement mécanique, qui consiste à ajouter à ce premier polymère un second polymère ou copolymère, non susceptible de donner des radicaux par traitement mécanique, à effectuer le traitement mécanique de la composition polymérique ainsi obtenue, et à favoriser une réaction de propagation des radicaux du premier au second polymère ou copolymère.

Selon une autre caractéristique du procédé, on choisit les conditions du traitement mécanique (température externe du malaxeur ou de l'extrudeuse, par exemple, et vitesse de rotation) pour que la température interne de la composition polymérique dépasse la température de dégradation du premier polymère.

Selon une autre caractéristique, la composition polymérique comprend 10 à 90 parties en poids du premier polymère ou copolymère susceptible de donner des radicaux par traitement mécanique, et 90 à 10 parties en poids du second polymère ou copolymère non susceptible de donner des radicaux par traitement mécanique.

Le premier polymère ou copolymère peut en fait être un mélange de deux ou plusieurs polymères ou copolymères susceptibles de donner des radicaux par traitement mécanique, tandis que le second polymère ou copolymère peut également être un mélange de deux ou plusieurs polymères ou copolymères non

susceptibles de donner des radicaux par traitement mécanique.

Selon une autre caractéristique du procédé, il consiste à traiter une composition formée de 90 à 99% en poids de la matrice polymérique, et de 1 à 10% en poids du composé du silane.

Le malaxage se fait à des températures internes élevées, favorisées par une viscosité importante du polymère ou copolymère vinylique.

Sans que les inventeurs envisagent d'être limité à ce seul schéma réactionnel, ils estiment que celui-ci pourrait être le suivant, R1 désignant des radicaux du polymère de plus grande viscosité, et R2 des radicaux du polymère de moins grande viscosité:

1. Malaxage —(température - cisaillement)→ R1•
2. R1• —O2→ R1OO•
3. R1OO• + R1 → R1OOH ou R1OOR1 + R1•
4. R1OO• + R2 → R1OOH ou R1OOR2 + R2•
5. R2• —O2→ R2OO•
6. R2OO• + R2 → R2OOH ou R2OOR2 + R2•

Les radicaux produits par cisaillement (en 1) du polymère de haute viscosité réagissent avec l'oxygène dissous pour créer des sites peroxy R1OO• (en 2).

Les sites peroxy se transforment en peroxydes en arrachant un hydrogène, par exemple, à la chaîne polymérique de l'un ou l'autre polymère (en 3 et 4).

Les nouveaux radicaux ainsi créés réagissent eux-mêmes avec l'oxygène pour recréer des sites peroxy, et ainsi de suite.

Si la température interne de la masse polymérique est suffisante, elle entraîne une décomposition homolytique des peroxydes (énergie d'activation 35 kcal/mole), et les radicaux créés par le cisaillement et la décomposition homolytique des peroxydes sont disponibles pour le greffage du vinylsilane, suivant un mécanisme connu.

Expérimentalement, on a trouvé que la vitesse de greffage du silane est limitée par la décomposition des peroxydes, ce qui montre que la température interne de la matière est un paramètre essentiel, tandis que la viscosité est nécessaire pour initier la création préalable de radicaux, et élever la température interne du polymère.

Si la viscosité du polymère est suffisante, on peut créer une quantité molaire de peroxydes polymériques égale à la quantité molaire d'oxygène dissous dans la masse polymérique.

Par polymère de plus grande viscosité, ou susceptible de donner des radicaux par traitement mécanique, on entend ici un polymère dont la viscosité est suffisante pour, dans les conditions de malaxage du procédé:
- entraîner la production de radicaux libres par effet mécanique de cisaillement, et
- faire monter suffisamment la température de la masse polymérique pour entraîner la décomposition des peroxydes formés.

Par polymère de moins grande viscosité, ou non susceptible de donner des radicaux par traitement mécanique, on entend un polymère dont la viscosité est suffisamment faible pour qu'il ne donne pas lieu à production de radicaux libres par cisaillement.

D'autres aspects, caractéristiques et avantages de l'invention apparaîtront des exemples qui suivent.

Dans ces exemples, ainsi que dans les revendications, les quantités sont exprimées en parties en poids, sauf indication contraire.

I. Greffage au Brabender

Exemple 1

Dans cet exemple, on utilise un mélange de 66,5 parties en poids d'un polyéthylène haute densité (brièvement ci-après PEHD), HOSTALEN GR 7255 de Hoechst, ayant un indice de fluidité MFI de 0,03 g/10 min. suivant ASTM-D-1238, de 33,5 parties en poids d'un polyéthylène basse densité (brièvement ci-après PEBD), STAMYLAN 2810 de DSM, d'indice de fluidité MFI 0,3 g/10 min., et 4 parties en poids de silane A 172 (vinyltriméthoxyéthoxysilane) de UNION CARBIDE.

On utilise comme mélangeur un viscosimètre Brabender (Plasticorder).

La poudre de PEHD et les granules de PEBD sont imprégnés du silane; on introduit le tout dans le mélangeur (vitesse de rotation 10 t/min) et, lorsque le mélange est fondu, on porte la vitesse à 60 t/min pour assurer un cisaillement suffisant du PEHD.

Au début, la viscosité du mélange diminue, suite à l'augmentation de la température interne de la masse polymérique.

Au bout d'un certain temps, la viscosité augmente, ce qui correspond au greffage du silane sur les polymères, le silane greffé ne jouant plus son rôle de lubrifiant, et l'encombrement des chaînes macromoléculaires greffées augmentant, avec pour résultat une friction plus élevée, et donc une augmentation de la viscosité.

La température externe du malaxeur est fixée à 180° C.

La durée du malaxage est de 2 minutes, la température interne montant à 230° C en fin de malaxage.

Après le malaxage, on presse le polymère greffé, pour en faire une plaque de 1,5 mm d'épaisseur.

On met la plaque pendant 8 heures au contact d'eau bouillante et de dibutyldilaurate d'étain (ci-après brièvement DBTDL) comme catalyseur de condensation, pour produire la réticulation des polymères greffés.

On prépare ensuite des éprouvettes auxquelles on fait subir un test de fluage (2 bars, 15 minutes, 200° C). On trouve un taux de fluage de 15%.

Le pourcentage d'insoluble mesuré par extraction de 24 heures dans le toluène bouillant est de 76%.

Exemple 2

Les polyéthylènes doivent être protégés par l'introduction d'antioxydants thermiques, si on veut leur assurer une bonne stabilité pendant toute leur durée d'utilisation.

Le présent exemple a pour but de montrer que l'addition d'antioxydants est possible dans le cadre de l'invention.

Etant donné que le processus de greffage du vinylsilane est un phénomène de propagation radicalaire, il faut trouver des antioxydants qui n'interagissent que faiblement avec les radicaux polymériques R·.

On recommande habituellement une amine aromatique de formule 1,2-dihydro-2,2,4-triméthylquinoléine polymérisée (que l'on trouvre dans le commerce entre autres sous les dénominations FLECTOL H, ANOX HB, VULCANOX HX, AGERITE RESIN D, AGERITE MA).

Dans cet exemple, on répète l'exemple 1, si ce n'est que l'on ajoute au mélange malaxé 0,1 partie en poids d'ANOX HB comme antioxydant.

On constate que cette addition impose d'élever la température du bain de malaxage, l'antioxydant inhibant partiellement le greffage du vinylsilane.

| Mélange | Hostalen GR 7255 | Stamylan 2810 | A 172 | Temp. bain °C | ANOX HB | Durée malaxage min | Fluage (2 bars 200°C, 15 min) % |
|---|---|---|---|---|---|---|---|
| 1 | 66,5 | 33,5 | 4 | 180 | 0 | 2 | 15 |
| 2 | 66,5 | 33,5 | 4 | 180 | 0,1 | 2 | casse (fluage trop grand) |
| 3 | 66,5 | 33,5 | 4 | 200 | 0,1 | 3 | 180 |

Exemple 3

Afin de constater que d'autres polyoléfines peuvent convenir, on choisit un polyéthylène chloré (BAYER CM 2551), ayant une viscosité Mooney (ML 5 + 4, 120° C) d'environ 130, en mélange avec l'HOSTALEN GR 7255.

La température du pétrin du Brabender est fixée à 200° C, et on procède pour le reste comme à l'exemple 1.

Les résultats sont donnés au tableau qui suit:

| Essai | 1 | 2 |
|---|---|---|
| BAYER CM 2551 (parties en poids) | 80 | 60 |
| HOSTALEN GR 7255 (parties en poids) | 20 | 40 |
| Silane A 172 (parties en poids) | 4 | 4 |
| Durée du malaxage | 3 min | 3 min |
| Vitesse de rotation | 90 t/min | 90 t/min |
| Taux d'insoluble | 63 | 60 |

De ces exemples, il résulte qu'il faudra cependant encore y introduire une certaine quantité de stabilisant (oxygène, déhydrochlorination), mais on voit que le greffage du silane est possible de cette manière.

Exemple 4

On choisit comme élastomères le VISTALON 719 (viscosité Mooney ML 1 + 8, 127°C de 50) de ESSOCHEM.

C'est un copolymère éthylène-propylène à taux d'éthylène de l'ordre de 70%.

Comme l'élastomère ne sera pas réticulé lors de sa mise en forme, il peut être avantageux de lui ajouter une certaine quantité de PEHD pour augmenter sa dureté à la température ambiante.

On ajoute 25% de PEHD (HOSTALEN GR 7255)

Le silane utilisé est le silane A 172.

Le bain de malaxage est maintenu à 210°C, et la température interne de la matière monte à 285°C après 5 minutes de malaxage.

En conditionnant les éprouvettes comme dans l'exemple 1, on obtient des taux de 84% d'insoluble et de 20% de fluage.

Exemple 5

On traite un mélange de deux copolymères éthylène-propylène (ci-après brièvement EPM): le VISTALON VM 82 E (indice de fluidité MFI -5 kg/230°C : 5 g/10 min) et le VISTALON 719, de ESSOCHEM, dans les proportions 55/45.

On imprègne les élastomères de 4% en poids de silane A 172.

Après 5 minutes de malaxage dans les mêmes conditions qu'à l'exemple 2, la température interne de la masse valait 260°C.

Après réticulation, le fluage vaut 40% et le taux d'insoluble 81%.

Exemples 6 à 11

Ces exemples ont pour but de déterminer dans quelles conditions d'autres élastomères (genre éthylène-acétate de vinyle) se prêtent à cette possibilité d'utiliser la viscosité et la température interne pour initier le greffage du vinylsilane, lors du malaxage.

Le tableau suivant donne les taux de fluage et pourcentages d'insolubles des mélanges dans lesquels on a introduit une certaine proportion de copolymère éthylène-acétate de vinyle (ESCORENE UL 00112 de ESSOCHEM, à 12% d'acétate de vinyle).

Cet ESCORENE a été choisi parce qu'il se rapproche des polyéthylènes et qu'il présente une viscosité relativement importante (MFI 0,5 g/min selon ASTM-D-1238)

La durée du malaxage est exprimée en minutes, et les températures en °C.

| Composition | VIST. VM82E | ESC 112 | VIST 719 | HOST. GR7255 | A 172 | Durée malax. | T bain | T fin malax. | Fluage % | Insol. % |
|---|---|---|---|---|---|---|---|---|---|---|
| Exemple | | | | | | | | | | |
| 6 | - | 45 | 45 | 10 | 4 | 5 | 210 | 272 | 10 | 82 |
| 7 | 22,5 | 45 | 22,5 | 10 | 4 | 5 | " | 260 | 30 | 81 |
| 8 | - | 77 | 22 | - | 4 | 5 | " | 250 | 60 | 70 |
| 9 | - | 77 | 11,5 | 11,5 | 4 | 5 | " | 255 | 50 | 73 |
| 10 | 33 | 33 | 22 | 11 | 4 | 5 | " | 257 | 30 | 84 |
| 11 | - | 90 | - | 10 | 4 | 5 | " | 265 | 45 | 68 |

Dans l'exemple 8, l'élastomère non réticulé ne présente pas assez de dureté, les propriétés adhérentes de ce produit sont trop importantes pour lui assurer une réticulation sans déformation.

L'introduction de 10 parties en poids de PEHD lui confère une rigidité suffisante pour le réticuler sans problème.

Il faut en outre signaler que les EPM fournis par la société ESSOCHEM sont livrés avec une certaine quantité d'antioxydants.

II. Greffage lors de l'extrusion

Exemple 12 à 16

Constatant l'importance conjuguée de la viscosité et de la température interne, on a extrudé du polyéthylène à haute viscosité avec du silane, afin de voir si le greffage était possible au cours de l'opération d'extrusion.

Une extrapolation des temps de greffage à différentes températures internes montre que, pour obtenir un bon greffage en des temps compatibles avec des temps de séjour dans la zone de pompage et de la filière de l'extrudeuse, il faut atteindre, dans ces zones, des températures internes supérieures à 230°C (sans antioxydants), 275°C (0,1% ANOX HB), et 320°C (0,2% ANOX HB + 0,1% IRGANOX 1035).

Grâce à une stabilisation élevée, le polyéthylène présente de bonnes caractéristiques de vieillissement.

Les propriétés de réticulation sont excellentes.

L'extrudeuse Brabender est munie d'une vis 25D.

On considère 4 températures, à savoir: 1 = zone d'alimentation, 2 = zone de compression, 3 = zone de pompage, 4 = tête et filière (bandelettes de 25 mm de large et de 0,7 mm d'épaisseur).

Pour les exemples 12 à 16 et 18, on a utilisé un mélange contenant un PEHD, l'HOSTALEN GR 7255, un polyéthylène linéaire moyenne densité (brièvement ci-après PELMD), l'UNIFOS 8001 de UNIFOS, ayant un indice de fluidité de 0,7 g/min. (MFI suivant ASTM-D-1238), et du silane A 151.

Comme antioxydant, on utilise l'ANOX HB:
1,2-dihydro-2,2,4-triméthylquinoléine polymérisée, de BAYER, et l'IRGANOX 1035, phénol stériquement encombré de CIBA GEIGY.

Exemple 12

Composition (parties en poids)

| | | |
|---|---|---|
| HOSTALEN GR 7255 | 80 | 80 |
| UNIFOS 8001 | 20 | 20 |
| A 151 (vinyltriéthoxysilane) | 3 | 3 |

Profil de température: 200-240-280-300°C

Propriétés

| Echant. | | Vitesse (t/min) | Fluage (200°C) % | | Insoluble % | |
|---|---|---|---|---|---|---|
| 60 | 64 | 15 | 30 | 40 | 81 | 76 |
| 61 | 65 | 30 | 25 | 40 | 78 | 79 |
| 62 | 66 | 60 | 25 | 40 | 82 | 78 |
| 63 | 67 | 90 | 20 | 40 | 88 | 80 |

Exemple 13

Composition (parties en poids)

| | | | |
|---|---|---|---|
| HOSTALEN GR 7255 | 90 | 90 | 90 |
| UNIFOS 8001 | 10 | 10 | 10 |
| A 151 (vinyltriéthoxysilane) | 3 | 3 | 3 |
| ANOX HB | 0,1 | 0,2 | 0,3 |

Profil de température: 200-240-280-300°C

Propriétés

| Echant. | Vitesse (t/min) | Fluage (200°C) % | Insoluble % |
|---|---|---|---|
| 80 84 88 | 15 | 140 casse 100 | 66 78 69 |
| 81 85 89 | 30 | 100 65 50 | 70 75 71 |
| 82 86 90 | 60 | 85 30 60 | 69 76 71 |
| 83 87 91 | 90 | 130 60 40 | 68 74 72 |

Exemple 14

Composition (parties en poids)

| | | |
|---|---|---|
| HOSTALEN GR 7255 | 90 | 90 |
| UNIFOS 8001 | 10 | 10 |
| A 151 (vinyltriéthoxysilane) | 3 | 3 |
| ANOX HB | 0,2 | 0,2 |
| IRGANOX 1035 | - | 0,1 |

Profil de température: 190-225-260-300°C

Propriétés

| Echant. | Vitesse (t/min) | Fluage (200°C) % | Insoluble % |
|---|---|---|---|
| 110 114 | 15 | Casse 8' Casse 7' | 76 68 |
| 111 115 | 30 | Casse 8' Casse 11' | 78 65 |
| 112 116 | 60 | Casse 12' 80 | 77 57 |
| 113 117 | 90 | 160 50 | 78 68 |

Exemple 15

Composition (parties en poids)

| | | |
|---|---|---|
| HOSTALEN GR 7255 | 90 | 90 |
| UNIFOS 8001 | 10 | 10 |
| A 151 (vinyltriéthoxysilane) | 3 | 3 |
| ANOX HB | 0,2 | 0,2 |
| IRGANOX 1035 | - | 0,1 |

Profil de température: 190-225-280-300°C

Propriétés

| Echant. | | Vitesse (t/min) | Fluage (200°C) % | | Insoluble % | |
|---|---|---|---|---|---|---|
| 122 | 118 | 15 | Casse 11' | 120 | 74 | 65 |
| 123 | 119 | 30 | 80 | 140 | 74 | 66 |
| 124 | 120 | 60 | 50 | casse | 75 | 69 |
| 125 | 121 | 90 | 40 | 80 | 75 | 68 |

Exemple 16

Composition (parties en poids)

| | | |
|---|---|---|
| HOSTALEN GR 7255 | 90 | 90 |
| UNIFOS 8001 | 10 | 10 |
| A 151 (vinyltriéthoxysilane) | 3 | 3 |
| ANOX HB | 0,2 | 0,2 |
| IRGANOX 1035 | - | 0,1 |

Profil de température: 190-225-310-320°C

Propriétés

| Echant. | | Vitesse (t/min) | Fluage (200°C) % | | Insoluble % | |
|---|---|---|---|---|---|---|
| 126 | 130 | 15 | (?)Casse 2' | 50 | (?)19 | 77 |
| 127 | 131 | 30 | 30 | 30 | 80 | 80 |
| 128 | 132 | 60 | 40 | 30 | 82 | 80 |
| 129 | 133 | 90 | 40 | 30 | 81 | 79 |

Exemple 17

Cet exemple concerne l'extrusion d'un mélange de PEHB et d'EPM.

Le polyéthylène est l'HOSTALEN GR 7255, et l'EPM est le DUTRAL CO 038 (environ 30% de propylène, viscosité Mooney de 80) de MONTEDISON, sous forme de granules poreux.

Composition (parties en poids)

HOSTALEN GR 7255 50

DUTRAL CO 038 50

A 151 (vinyltriéthoxysilane) 3

ANOX HB 0,2

IRGANOX 1035 0,1

Vitesse de rotation: 30 t/min.

Profil de température: 150-170-300-320° C

Après réticulation, le taux d'insoluble mesuré vaut 67%

Exemple 18

Cet exemple est relatif à la possibilité d'introduction de charges dans les polymères.

On fait deux essais, l'un avec une craie hydrophobe (par l'acide stéarique), de granulométrie 1 um, et l'autre avec une craie de même granulométrie, mais non traitée.

Les inventeurs estimaient que la craie traitée devait donner de meilleurs résultats parce qu'elle ne devait pas "consommer" de silane.

De façon surprenante, c'est la craie non traitée qui a donné les meilleurs résultats, parce qu'elle n'entraînait pas une diminution de la viscosité.

La craie est séchée en étuve pendant 8 heures à 70°C.

Composition (parties en poids)

HOSTALEN GR 7255 90

UNIFOS 8001 10
Craie fine (1 um) 10
A 151 (vinyltriéthoxysilane) 1,8
ANOX HB 0,2
IRGANOX 1035 0,1
Acétone 0,75
Profil de température: 190-225-320-340°C

Après traitement de l'extrudat pendant une nuit dans l'eau, en présence de DBTDL, on obtient un taux de fluage (2 bars) de 40%

Exemple 19

Ces essais, qui sortent du domaine de l'invention, ont été effectués pour déterminer les propriétés du produit obtenu en traitant un polyéthylène de haute viscosité, seul, en présence de silane.

| Echantillon | 218 | | 222 | |
|---|---|---|---|---|
| HOSTALEN GR 7255 | 100 | | 100 | |
| ANOX HB | 0,2 | | 0,2 | |
| IRGANOX 1035 | 0,2 | | 0,2 | |
| A 171 | 1,5 | | 1,5 | |
| Acétone | 0,75 | | 0,75 | |
| DBTDL | 2 gtes | | 2 gtes | |
| Profil de température: | 200-230-320-340 | | 200-220-310-340 | |
| Fluage (%) | 70 | | 40 | |
| Résistance en traction (ASTM-D-638) | | | | |
| vitesse (mm/min) | 27 | 100 | 27 | 100 |
| (%/min) | 100 | 400 | 100 | 400 |
| Tension de rupture (MPa) | 26,5 | 26 | 25 | 26,5 |
| Allgmt à la rupture (%) | 620 | 570 | 575 | 580 |

La dureté Shore A (90), ainsi que les propriétés rhéologiques du produit montrent qu'il n'est pas utilisable industriellement, contrairement au produits obtenus selon l'invention (dureté Shore A de l'ordre de 75 à 80).

Bien entendu, l'invention n'est pas limitée aux modes de réalisation décrits, qui n'on été choisis qu'à titre d'exemple.

**Revendications**

1. Procédé de production de polymères et copolymères vinyliques réticulables par greffage d'un composé hydrolysable du silane, dans lequel on soumet à traitement mécanique, en présence d'un composé du silane, un polymère ou copolymère susceptible de donner des radicaux par traitement mécanique, caractérisé en ce qu'il consiste à ajouter à ce premier polymère un second polymère ou copolymère, non susceptible de donner des radicaux par traitement mécanique, à effectuer le traitement mécanique de la composition polymérique ainsi obtenue, et à favoriser une réaction de propagation des radicaux du premier au second polymère ou copolymère.

2. Procédé selon la revendication 1, caractérisé en ce que l'on choisit les conditions du traitement mécanique pour que la température interne de la composition polymérique dépasse la température de dégradation du premier polymère.

3. Procédé selon la revendication 1 ou 2, caractérisé en ce que la composition polymérique comprend 10 à 90 parties en poids du premier polymère ou copolymère susceptible de donner des radicaux par traitement mécanique, et 90 à 10 parties en poids du second polymère ou copolymère non susceptible de donner des radicaux par traitement mécanique.

4. Procédé selon l'une quelconque des revendications 1 à 3, caractérisé en ce que le premier polymère est un mélange de deux ou plusieurs polymères susceptibles de donner des radicaux par traitement mécanique.

5. Procédé selon l'une quelconque des revendications 1 à 4, caractérisé en ce que le second polymère est un mélange de deux ou plusieurs polymères non susceptibles de donner des radicaux par traitement mécanique.

6. Procédé selon l'une quelconque des revendications 1 à 5, caractérisé en ce qu'il consiste à traiter une composition formée de 90 à 99% en poids de la composition polymérique, et de 1 à 10% en poids du composé du silane.

Office européen des brevets

# RAPPORT DE RECHERCHE EUROPEENNE

Numero de la demande

EP 87 87 0093

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | DE-A-1 694 612 (MONSANTO)<br>* Page 5, lignes 16-28; page 15, ligne 26 - page 17, ligne 21; exemples 6,7 * | 1 | C 08 F 255/00<br>C 08 K 5/54 //<br>(C 08 F 255/00<br>C 08 F 230:08 ) |
| X | FR-A-2 315 513 (KABEL- UND METALLWERKE GUTEHOFFNUNGSHUTTE)<br>* En entier * | 1 | |
| D,A | DE-B-1 794 028 (MIDLAND SILICONES LTD) | | |
| A | BE-A- 898 893 (NESTE OY)<br>* Revendications 1,2,6; page 4, lignes 4-31 * | 1 | |
| A | DE-A-3 207 713 (KABELMETAL ELECTRO GmbH)<br>* Exemples II,III * | 1 | **DOMAINES TECHNIQUES RECHERCHES (Int. Cl.4)** |
| A | GB-A-2 002 395 (KABEL- UND METALLWERKE GUTEHOFFNUNGSHUTTE)<br>* Page 2, ligne 58 - page 3, ligne 5 * | 1 | C 08 F<br>C 08 K |

Le présent rapport de recherche a été établi pour toutes les revendications

| Lieu de la recherche | Date d'achèvement de la recherche | Examinateur |
|---|---|---|
| LA HAYE | 20-10-1987 | MEULEMANS R.A.M.G.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82